# EUROPÄISCHE PATENTANMELDUNG

(11) **EP 1 428 684 A2**
(43) Veröffentlichungstag der Anmeldung: **16.06.2004**
(21) Anmeldenummer: 03027572.1
(22) Anmeldetag: 01.12.2003
(51) Int. Cl.: B44C 1/10

(54) **Dekorfolie**

(30) Priorität: 29.11.2002 DE 10256153
(71) Anmelder: Folex Coating GmbH, 50767 Köln (DE)
(72) Erfinder: Schleussner, Martin, Dr., 50765 Köln (DE); Weber, Arne, 52064 Aachen (DE)
(74) Vertreter: Schreiber, Christoph, Dr.

(57) **Zusammenfassung**

Dekorfolie mit einer transparenten Trägerschicht mit einer Vorderseite und einer Rückseite, wobei
- eine im Siebdruck bedruckbare Anti-Newton-Schicht an die Rückseite und
- eine antireflektive Frontschicht an die Vorderseite der Trägerschicht gebunden ist.

## Beschreibung

Die vorliegende Erfindung betrifft eine Dekorfolie.

Flüssigkristallanzeigen sind mittlerweile weit verbreitet. Die wesentlichen Elemente sind Flüssigkristalle, die zwischen zwei Glasscheiben eingeschlossen sind, wobei die Glasscheiben als Elektroden wirken und einzelne Felder so angesteuert werden können, dass Lichtdurchlässigkeit oder -undurchlässigkeit erreicht wird.

Häufig befindet sich auf der Displayoberseite eine Kunststofffolie, die auf die Displayoberseite geklebt wird. Teilweise befinden sich um das Display herum bedruckte Dekorfolien, die auf die Displayoberseite geklebt werden und dabei die eigentliche Displayfläche freilassen.

Soweit das Display Sensorfelder aufweist, die als Tastatur verwendet werden können ("Touchscreen") ist es beim Verkleben der Frontfolie wichtig darauf zu achten, dass keine Interferenzen, sogenannte Newton-Ringe entstehen. Diese entstehen durch Reflektion des Lichtes zwischen zwei Schichten. Daher muss auf eine sorgfältige Verklebung geachtet werden.

Sowohl das Aufbringen einer verklebten Schicht als auch die Aufbringung einer weiteren Dekorfolie in den Außenbereichen des Displays sind mit erhöhtem Aufwand verbunden. Beim Verkleben ist darauf zu achten, dass keine Ritzen oder Spalten entstehen, in denen sich Schmutz ansammeln kann.

Aufgabe der vorliegenden Erfindung war es daher, eine Folie zu entwickeln, die die oben genannten Nachteile überwindet.

Erfindungsgemäß wird die Aufgabe gelöst durch eine Dekorfolie mit einer transparenten Trägerschicht mit einer Vorderseite und einer Rückseite, wobei
- eine im Siebdruck bedruckbare Anti-Newton-Schicht an die Rückseite und
- eine antireflektive Frontschicht an die Vorderseite der Trägerschicht gebunden ist.

Eine Anti-Newton-Schicht im Sinne dieser Anmeldung ist eine Schicht, die das Auftreten von Newton-Ringen zwischen der Trägerschicht und einer darunter liegenden Glasscheibe verringert. Insbesondere ist dies eine Schicht, bei der so Strukturen in eine Schicht eingebracht sind, dass diese 200 bis 1200 nm, bevorzugt 300 bis 800 nm, aus der Filmschicht herausstehen und der Abstand zwischen den Erhebungen im Bereich von 100 bis 300 nm liegt.

Bedruckbar im Sinne dieser Anmeldung bedeutet ein Gitterschnitt gemäß ISO 2409 (1992) von 0 bis 2, bevorzugt 0 oder 1. Die erfindungsgemäßen Folien sind im Siebdruck, im Offsetdruck, im Digitaldruck mit Fest- oder Flüssigtoner oder mit Thermotransferfarben bedruckbar.

Die Trägerfolie kann beispielsweise ausgewählt werden aus Polyethylenterephthalat, Polyethylennaphthalat, Polycarbonat, Polyethylen, Polypropylen, Polyvinylchlorid und Mischungen davon.

Die bedruckbare Anti-Newton-Schicht enthält vorzugsweise Partikel. Dann besteht die Anti-Newton-Schicht aus einer filmbildenden Lackformulierung, die beispielsweise Silikatpartikel enthält. Alternativ kann es sich bei der Anti-Newton-Schicht um eine Schicht handeln, der durch Prägung die notwendige Strukturierung gegeben wird.

Die erfindungsgemäßen Dekorfolie können auf einem Display aufgebracht werden, ohne mit diesem verklebt zu werden. Vorteilhafterweise können diese auf der Rückseite bedruckt werden, so dass sowohl am Rand des Displays als auch grundsätzlich auf dem Display vorgedruckte Markierung, Information etc. vorgesehen sein können.

Geeignete Anti-Newton-Schichten bestehen beispielsweise aus einem Bindersysem, das Silikatpartikeln enthält. Das Bindersystem kann eine filmbildende Lackformulierung, z.B. auf Basis von Epoxyharzen, Isocyanaten, Acrylaten, Maleinsäureanhydrit-Derivaten oder gelöstem Polyester sein. Die Silikatpartikel können beispielsweise pyrolisierte Kieselsäure, Mikroglasspheren, oder andere transparente Partikel auf Silikatbasis sein, die eine Korngröße von 0,01 bis 5 µm aufweisen.

Geeignete haftvermittelnde Schichten sind dem Fachmann grundsätzlich bekannt, es kann sich dabei z.B. um Polyvinylidenchlorid-Beschichtungen, Isocyanat-Polymerisate, Polyurethane handeln oder um Verfahren, bei denen die Trägerschicht so aktiviert wird, dass Substanzen kovalent gebunden werden können, beispielsweise Plasma- oder Coronabehandlung.

Die Dekorfolie weist eine antireflektive Frontschicht auf, die sich auf der Vorderseite der Trägerschicht befindet. Solch antireflektiven Schichten können auf verschiedene Wege erzeugt werden, beispielweise durch Beschichtung mit mattierten Lackformulierung, die UV-härtend sind, als Zweikomponentenmischung reaktiv aushärten oder durch Trocknung filmbildend sind. Bevorzugt ist die Frontschicht ebenfalls bedruckbar.

Weiterhin kann zur Beschichtung eine Lackformulierung eingesetzt werden, die auf chemischen Wege eine Runzelung oder Strukturierung ergeben, wobei ebenfalls UV-Härtung, Reaktion der Zweikomponentenmischung oder Filmbildung durch Trocknung möglich ist. Alternativ kann die Frontschicht geprägt sein. Dies ist z.B. erhältlich durch Prägung einer nicht vollständig ausgehärteten Beschichtungsmasse, z.B. durch einer Art Kalander: Die Kalanderwalze, die auf die nicht ganz ausgehärtete Dekorschicht presst, ist mit einer rauhen Oberfläche versehen. Die rauhe Oberfläche kann durch Gravieren, Sandstrahlen oder andere lithographischen Verfahren, wie Ätzen und Laser-Bearbeitung erzeugt werden.

Die hinreichend feine Textur der so bearbeiteten Walze überträgt sich auf die Lackschicht. Anschließend wird die Lackschicht gehärtet.

Die Lackschicht kann thermisch trocknend und strahlungshärtend (vorzugsweise UV) sein.

Erfindungsgemäß kann jedoch - abgesehen von der antireflektiven Schicht - auch eine unbehandelte Frontschicht, eine druckvorbehandelte Frontschicht oder eine kratzfest ausgerüstete Frontschicht zum Einsatz kommen. Mattierungen werden beispielsweise über die Zugabe und die Abmischung von pyrolisierter Kieselsäure in der Beschichtungsmasse erreicht.

Gegenstand der Erfindung ist auch die Verwendung der beschriebenen Folie als Schicht auf einer Glasplatte, insbesondere von Frontscheiben eines LCD-Displays, eines TFT-Displays oder eines Touchscreens handelt.

Die Erfindung wird durch die folgenden Beispiele weiter erläutert.

### Beispiel 1

Eine PET-Trägerfolie wurde beschichtet mit einer PET-Lösung 305 (Firma Morton) enthaltend 5 Gew.-% Isocyanat-Härter, Katalyst F (Firma Morton) und 0,5 Gew.-% Mattierungsmittel HK OH der Firma Degussa. Hiermit wurde die PET-Folie in einer Schichtdicke von ca. 2 µm beschichtet. Die so erhaltene Folie wurde nach der Aushärtung mit einer Siebdruckfarbe (Fa. Marabu, Typ SR) bedruckt. Es ergab sich ein Gitterschnitt von 0.

### Beispiel 2

Die Vorderseite der entsprechenden Folie wurde dann beschichtet mit einer Mischung enthaltend 4,4'-Methylendiphenyldiisocyanat, 3% in Xylol, 2-Methoxy-1-methylethylacetat, 3% in Propylbenzol mit 0,5% Mattierungsmittel HK400 (Firma Degussa). Die Schichtdicke betrug 15 µm. Anschließend erfolgt eine 10 minütigen Trocknung bei 130°C in einem Lufttrockner.

### Beispiel 3

Auf einer weiteren Probe gemäß Beispiel 1 wurde eine Mischung aufgetragen aus einer Polyurethan-Dispersion in Wasser (Impranil 80 UD, Firma Bayer) vermischt mit 2% eines wasserlöslichen Polyisocyanates (195.70, Firma Jowat) mit 0,5 Gew.-% Mattierungsmittel HK400 der Firma Degussa und wieder oben bei 130°C 10 Minuten im Lufttrockner getrocknet. Hierbei entstehen ebenfalls hochwertige antireflektive Schichten.

### Beispiel 4

Eine Schicht wie oben wurde mit einer Mischung enthaltend ein Polyacrylat (Ebecryl 350 der Firma UCB Chemicals) + 0,1% Irgacure 500 (Firma Ciba) in wasserfreiem Methylacetat mit 0,5 Gew.-% Mattierungsmittel HK400 (Firma Degussa) beschichtet. Anschließend erfolgte eine Trocknung von 5 Minuten bei 120°C gefolgt von einer UV-Trocknung mit 3.000 mJ/cm². Hierdurch ergab sich ebenfalls eine hochwertige antireflektive Beschichtung.

### Beispiel 5

Eine Probe gemäß Beispiel 1 wurde mit Siebdruckfarbe (Fa. Marabu, Typ SR) gedruckt. Diese wurden mit einem Gitterschnittprüfgerät mit einem Schnittabstand von 1 mm geschnitten. Hierzu wurde die Prüfmuster auf eine ebene und harte Glasunterlage aufgelegt. Das Gitterschnittgerät wurde plan aufgelegt und mit mäßigem Druck so gezogen, dass alle Schnittlinien gleichmäßig ausgeprägt sind. Dann wurde ein zweiter Gitterschnitt im rechten Winkel zum ersten gezogen. Anschließend wurde ein Klebeband (Tesa, Bestellnummer 4156) luftblasenfrei mit einem Schaber aufgeklebt, so dass eine geschlossene Verbindung zum Untergrund erfolgt. Das Klebeband wurde mit einer schnellen Bewegung (Ruck) vom Probenkörper losgerissen. Die Auswertung erfolgt wie folgt:

| Bewertung | Schaden |
|---|---|
| 0 | Nichts wird abgelöst, scharfe Linien, scharfe Kanten, keine Ablösungen |
| 1 | Scharfe Linien, mikroskopische Kantenschäden, keine Ablösung |
| 2 | Saubere Linien, Kantenschäden, mikroskopische Ausrisse |
| 3 | Leichte Linienschäden, vereinzelte Ausrisse kleiner Quadrate |
| 4 | Linienschäden, vereinzelte Ausrisse kleiner Quadrate, Oberflächenschäden |
| 5 | Linienschaden, Beschichtungsablösung |
| 6 | Keine Farbhaftung, keine Zwischenhaftung |

Darüber hinaus wurde die mechanische Stabilität durch eine Flachprägung getestet. Hierzu wurde ein Silikonfinger auf eine entsprechend Folie gedruckt, so dass die Folie 0,3 mm eingedrückt wird. Eine erfindungsgemäß bedruckbare Folie zeigt nach 2 Mio Hübe keine Beschädigung der bedruckten Stellen.

## Patentansprüche

1. Dekorfolie mit einer transparenten Trägerschicht mit einer Vorderseite und einer Rückseite, wobei
• eine im Siebdruck bedruckbare Anti-Newton-Schicht an die Rückseite und
• eine antireflektive Frontschicht an die Vorderseite der Trägerschicht gebunden ist.

2. Dekorfolie nach Anspruch 1, **dadurch gekennzeichnet, dass** die Trägerfolie ausgewählt ist aus der Gruppe bestehend aus Polyethylenterephthalat, Polyethylennaphthalat, Polycarbonat, Polyethylen, Polypropylen, Polyvinylchlorid und Mischungen davon.

3. Dekorfolie nach einem der Ansprüche 1 oder 2, **dadurch gekennzeichnet, dass** die bedruckbare Anti-Newton-Schicht Partikel enthält.

4. Dekorfolie nach mindestens einem der Ansprüche 1 bis 3, **dadurch gekennzeichnet, dass** die bedruckbare Anti-Newton-Schicht eine filmbildende Lackformulierung enthaltend Silikatpartikel ist.

5. Dekorfolie nach mindestens einem der Ansprüche 1 bis 4 mit einer haftvermittelnden Schicht zwischen der Trägerschicht und der Anti-Newton-Schicht.

6. Dekorfolie nach mindestens einem der Ansprüche 1 bis 5, **dadurch gekennzeichnet, dass** die antireflektive Frontschicht durch Beschichtung mit einer mattierten Lackformulierung, einer Lackformulierung, die auf chemischem Wege eine Runzelung oder Strukturierung ergibt oder durch eine Prägung erreicht wird.

7. Dekorfolie nach mindestens einem der Ansprüche 1 bis 6, **dadurch gekennzeichnet, dass** die antireflektive Frontschicht bedruckbar ist.

8. Dekorfolie nach mindestens einem der Ansprüche 1 bis 7, **dadurch gekennzeichnet, dass** die bedruckbaren Schichten einen Gitterschnitt von 0 oder 1 aufweisen.

9. Glasplatte mit einer Dekorfolie nach einem der Ansprüche 1 bis 8.

10. Glasplatte nach Anspruch 9, **dadurch gekennzeichnet, dass** es sich bei der Glasplatte um die Frontscheibe eines LCD-Displays , eines TFT-Displays oder eines Touchscreens handelt.
